# DEMANDE DE BREVET EUROPEEN

(11) **EP 1 039 408 A1**
(43) Date de publication de la demande: **27.09.2000**
(21) Numéro de dépôt: 00410028.5
(22) Date de dépôt: 24.03.2000
(51) Int. Cl.: G06K 7/00, G06K 19/07

(54) **Telealimentation d'un transpondeur électromagnétique**

(30) Priorité: 26.03.1999 FR 9903981
(71) Demandeur: STMicroelectronics SA, 94250 Gentilly Cedex (FR)
(72) Inventeur: Bardouillet, Michel, 13790 Rousset (FR)
(74) Mandataire: de Beaumont, Michel

(57) **Abrégé**

L'invention concerne un transpondeur (10') comprenant un circuit oscillant (L2, C2) d'extraction d'un signal électromagnétique connecté à l'entrée d'un moyen de redressement (13), et un circuit comprenant un moyen résistif commuté (R, T) pour modifier la réponse du transpondeur vers l'émetteur dudit signal électromagnétique, la sortie du moyen de redressement étant reliée à un condensateur (Ca) de lissage, comprenant des moyens à conduction unidirectionnelle (18) pour interdire la décharge du condensateur dans le moyen résistif commuté.

## Description

La présente invention concerne le domaine des systèmes à transpondeurs électromagnétiques, c'est-à-dire comprenant des émetteurs-récepteurs (généralement mobiles) susceptibles d'être interrogés, sans contact et sans fil, par une borne (généralement fixe), dite borne de lecture et/ou d'écriture. L'invention concerne, plus particulièrement, les transpondeurs dépourvus d'alimentation autonome, c'est-à-dire qui extraient l'alimentation nécessaire aux circuits électroniques qu'ils comportent, du champ haute fréquence rayonné par une antenne de la borne de lecture et d'écriture. L'invention s'applique à de tels transpondeurs, qu'il s'agisse de transpondeurs à lecture seule, c'est-à-dire propres à fonctionner avec une borne se contentant de lire les données du transpondeur, ou à des transpondeurs de lecture-écriture qui contiennent des données qui peuvent être modifiées par la borne.

Les transpondeurs électromagnétiques sont basés sur l'emploi de circuits oscillants, côté transpondeur et côté borne de lecture-écriture. Ces circuits sont destinés à être couplés par champ magnétique proche lorsque le transpondeur entre dans le champ de la borne de lecture-écriture.

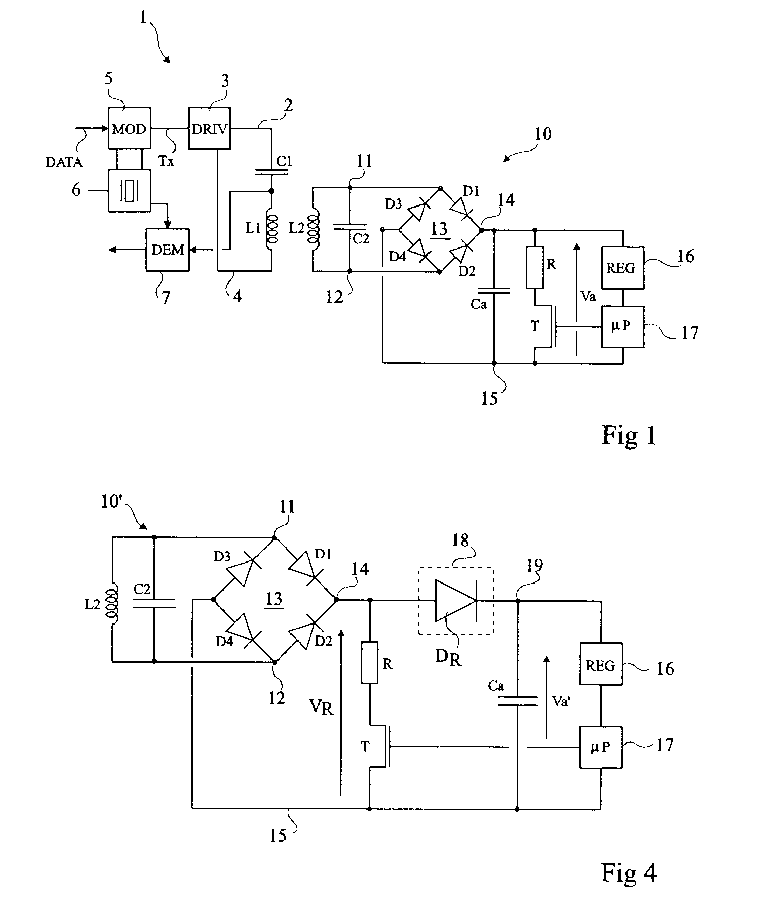

La figure 1 représente partiellement, de façon schématique et fonctionnelle, un exemple classique de système d'échange de données entre une borne 1 de lecture-écriture et un transpondeur 10.

Généralement, la borne 1 est essentiellement constituée d'un circuit oscillant formé d'une inductance L1 en série avec un condensateur C1, entre une borne 2 de sortie d'un amplificateur ou coupleur d'antenne 3 (DRIV) et une borne 4 à un potentiel de référence (généralement, la masse). L'amplificateur 3 reçoit un signal Tx de transmission haute fréquence, issu d'un modulateur 5 (MOD). Le modulateur reçoit une fréquence de référence, par exemple d'un oscillateur à quartz 6 et, si besoin, un signal DATA de données à transmettre. Le signal Tx sert, en l'absence de transmission de données de la borne 1 vers le transpondeur 10, uniquement de source d'énergie pour activer le transpondeur si celui-ci passe dans le champ. Les données à transmettre proviennent d'un système électronique, généralement numérique, par exemple un microprocesseur (non représenté).

Le point de connexion du condensateur C1 et de l'inductance Ll constitue, dans l'exemple représenté à la figure 1, une borne de prélèvement d'un signal Rx de données, reçues d'un transpondeur 10 à destination d'un démodulateur 7 (DEM). Une sortie du démodulateur communique (le cas échéant par l'intermédiaire d'un décodeur non représenté) les données reçues du transpondeur 10 au microprocesseur de la borne de lecture-écriture 1. Le démodulateur 7 reçoit généralement, de l'oscillateur 6, un signal d'horloge. La démodulation peut être effectuée à partir d'un signal prélevé aux bornes de l'amplificateur 3 et non aux bornes de l'inductance L1. Le microprocesseur de la borne 1 communique avec différents circuits d'entrée/sortie (clavier, écran, moyen de transmission vers un serveur, etc.) et/ou de traitement. Les circuits de la borne 1 tirent l'énergie nécessaire à leur fonctionnement d'un circuit d'alimentation non représenté, raccordé, par exemple, au réseau de distribution électrique.

Côté transpondeur 10, une inductance L2, en parallèle avec un condensateur C2, forme un circuit oscillant parallèle (appelé circuit résonant en réception), destiné à capter le champ engendré par le circuit oscillant (L1, C1) de la borne 1. Le circuit résonant (L2, C2) du transpondeur 10 est généralement accordé sur la fréquence du circuit oscillant (L1, C1) de la borne 1. Cet accord a pour objet de maximiser l'énergie captée par le transpondeur.

Les bornes 11, 12 du circuit résonant (L2, C2) qui correspondent aux bornes du condensateur C2, sont reliées à deux bornes d'entrée alternative d'un pont redresseur 13 constitué, par exemple, de quatre diodes D1, D2, D3, D4. Dans la représentation de la figure 1, l'anode de la diode D1 est connectée à la borne 11, de même que la cathode de la diode D3. L'anode de la diode D2 et la cathode de la diode D4 sont connectées à la borne 12. Les cathodes des diodes D1 et D2 constituent une borne positive 14 de sortie redressée. Les anodes des diodes D3 et D4 constituent une borne de référence 15 de la tension redressée. Un condensateur de lissage Ca est connecté aux bornes de sortie redressée 14, 15 du pont 13 de façon à lisser la tension redressée délivrée par le pont.

Quand le transpondeur 10 se trouve dans le champ de la borne 1, une tension haute fréquence est engendrée aux bornes du circuit résonant (L2, C2). Cette tension, redressée par le pont 13 et lissée par le condensateur Ca, fournit une tension d'alimentation à des circuits électroniques du transpondeur par l'intermédiaire d'un régulateur de tension 16 (REG). Les circuits électroniques du transpondeur ont été symbolisés à la figure 1 par un bloc 17 (µP). Il s'agit généralement d'une puce (intégrant le plus souvent le régulateur 16) contenant au moins une mémoire et un microprocesseur. Au microprocesseur sont notamment associés, par exemple, un démodulateur (non représenté) des signaux éventuellement reçus de la borne 1, et un modulateur (non représenté) pour transmettre des informations à la borne 1. Le transpondeur est généralement synchronisé au moyen d'une horloge (non représentée) extraite du signal haute fréquence récupéré aux bornes 11, 12 du condensateur C2 avant redressement.

Pour transmettre des données du transpondeur 10 vers la borne 1, le bloc 17 commande un étage de modulation (rétromodulation) du circuit résonant (L2, C2). On considérera ci-après les seuls étages de modulation dits résistifs, c'est-à-dire comprenant un élément résistif. L'étage de modulation est alors généralement constitué d'un interrupteur électronique (par exemple, un transistor T) et d'une résistance R, associés en série entre les bornes 14 et 15.

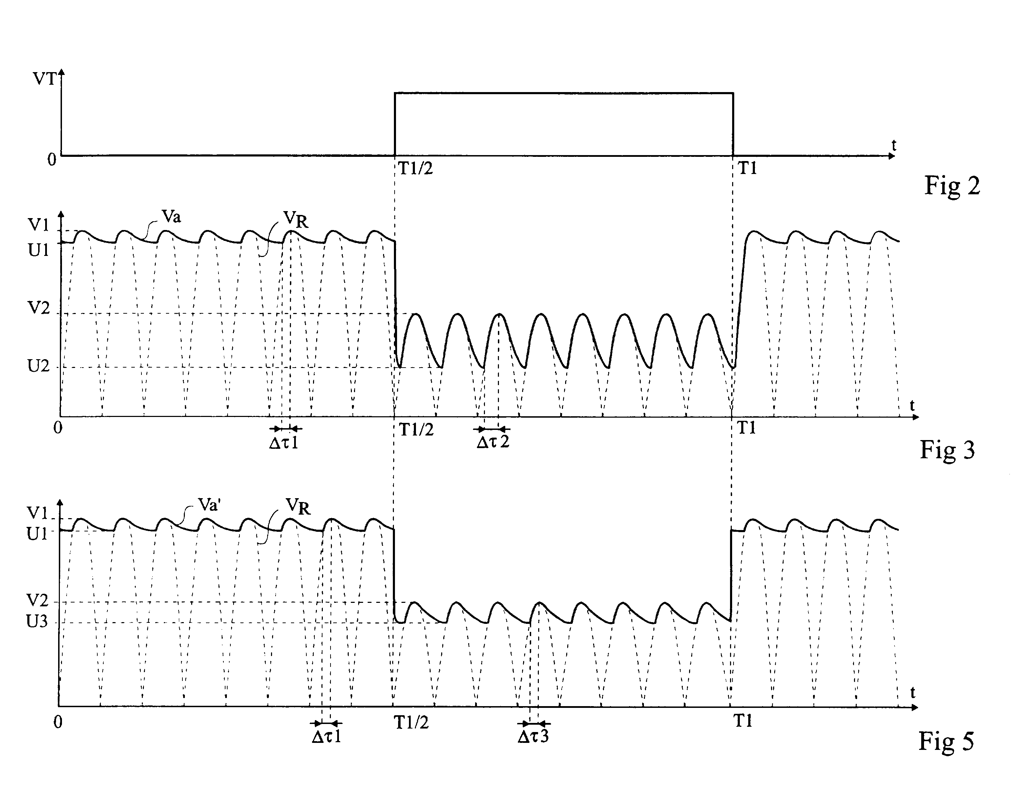

Les figures 2 et 3 illustrent le fonctionnement d'un transpondeur 10 tel que représenté en figure 1.

Plus particulièrement, la figure 2 représente le signal de commande VT du transistor T. Le signal VT a une fréquence nettement inférieure à la fréquence du signal d'excitation du circuit oscillant de la borne 1. Par exemple, le signal VT est un train d'impulsions d'une fréquence de 847,5 kHz (période T1 de sensiblement 74 ns), tandis que le signal d'excitation du circuit oscillant a une fréquence de 13,56 MHz (période de l'ordre de 1,18 µs). On suppose que pendant l'intervalle de temps [0, T1/2] le transistor T est ouvert, et que pendant l'intervalle suivant [T1/2, T1] le transistor T est fermé.

La figure 3 illustre la tension d'alimentation Va de la charge constituée des différents circuits 16, 17. Cette tension Va est la tension aux bornes du condensateur de lissage Ca alimenté par la tension sinusoïdale redressée V_{R}. La tension V_{R} est la tension extraite par le circuit résonant L2-C2 redressée par le pont 13.

Quand le transistor T du moyen de modulation résistif est ouvert, intervalle [0, T1/2], le condensateur Ca se décharge seulement légèrement à chaque alternance pour assurer l'alimentation des circuits 16 et 17. La tension Va évolue entre un niveau maximal V1 et un niveau minimal U1. Le niveau minimal U1 correspond à l'instant de la fin de décharge du condensateur Ca, c'est-à-dire auquel la tension V_{R} redevient égale à la tension aux bornes du condensateur. On désigne par Δτ1 l'intervalle de temps entre le passage de Va par un minimum (U1) et le passage de Va par un maximum (V1).

Quand le transistor T est fermé, intervalle [T1/2, T1], le circuit du transpondeur est soumis à un amortissement supplémentaire. On appellera ci-après cette période phase de rétromodulation. Le transpondeur prélève une quantité d'énergie plus importante du champ haute fréquence et la tension baisse aux bornes de l'enroulement L2. La tension V_{R} à la sortie du pont 13 baisse alors également comme l'illustre la figure 3 et atteint désormais un niveau maximal V2 inférieur au niveau maximal V1 de l'intervalle précédent [0, T1/2] d'ouverture du transistor T. En outre, la variation de tension entre le niveau maximum V2 et le niveau minimum U2 est plus importante que précédemment. En effet, le condensateur Ca se décharge non seulement pour alimenter les circuits 16, 17 mais aussi dans la résistance R. L'intervalle de temps Aτ2 défini comme l'intervalle de temps Δτ1 ci-dessus est nettement supérieur à Δτ1. Dans un exemple pratique dans lequel, pour une tension V1 maximale de 33 V, la tension minimale U1 est de sensiblement 30 V, avec un moyen résistif ayant une résistance de l'ordre de 2 kΩ, la tension maximale V2 est ramenée à 12 V, et la tension minimale U2 n'est que de 9 volts, ce qui risque d'être insuffisant pour une alimentation correcte du transpondeur (par exemple si la tension minimale d'alimentation requise est de 10 volts).

Ensuite, on suppose qu'à l'instant T1 (figure 2) on commande le transistor T à l'ouverture. Ce faisant, on retire la charge résistive R supplémentaire du transpondeur et la tension redressée V_{R}, et la tension d'alimentation Va retrouve les variations qu'elle avait pendant l'intervalle [0, T1/2].

Un inconvénient de ce type de modulation à l'aide d'un moyen résistif réside dans la diminution importante de la tension d'alimentation minimale. Une telle baisse peut conduire à un manque d'alimentation des circuits 16 et 17 et provoquer des dysfonctionnements du système.

La présente invention vise à pallier cet inconvénient et à assurer une tension utile minimale suffisante pour alimenter les différents circuits de façon satisfaisante.

Pour atteindre cet objet, la présente invention prévoit un transpondeur comprenant un circuit oscillant d'extraction d'un signal électromagnétique connecté à l'entrée d'un moyen de redressement, et un circuit comprenant un moyen résistif commuté pour modifier la réponse du transpondeur vers l'émetteur du signal électromagnétique, la sortie du moyen de redressement étant reliée à un condensateur de lissage, comprenant des moyens à conduction unidirectionnelle pour interdire la décharge du condensateur dans le moyen résistif commuté.

Selon un mode de réalisation de la présente invention, le moyen résistif commuté est entre le moyen de redressement et les moyens à conduction unidirectionnelle.

Selon un mode de réalisation de la présente invention, les moyens à conduction unidirectionnelle sont constitués d'une diode dont la cathode est connectée à la borne positive du condensateur.

Selon un mode de réalisation de la présente invention, le moyen de redressement est un pont de diodes entre les bornes de sortie duquel sont connectés, successivement et en parallèle, une première association en série d'une résistance et d'un transistor MOS et une deuxième association en série des moyens de conduction unidirectionnelle et du condensateur de lissage, le point milieu de la deuxième association série constituant une borne positive d'alimentation locale.

Selon un mode de réalisation de la présente invention, le circuit oscillant comporte, entre deux bornes d'alimentation, une inductance à point milieu définissant une ligne de référence, une association en série d'une résistance et d'un transistor MOS étant connectée entre une des bornes d'alimentation et la ligne de référence, et les moyens à conduction unidirectionnelle étant connectés entre chaque borne d'alimentation et une borne positive du condensateur de lissage.

Selon un mode de réalisation de la présente invention, des diodes de redressement sont intercalées entre ledit circuit oscillant et les moyens à conduction unidirectionnelle.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente un transpondeur électromagnétique classique associé à une borne ;
la figure 2 illustre un exemple d'une séquence de commande d'un commutateur d'un moyen de modulation résistif d'un transpondeur électromagnétique ;
la figure 3 illustre les variations de la tension d'alimentation Va de circuits électroniques d'un transpondeur classique tel que représenté en figure 1 ;
la figure 4 représente un premier mode de réalisation d'un transpondeur selon la présente invention ;
la figure 5 illustre les variations d'une tension d'alimentation Va' de circuits électroniques de la figure 4 ;
les figures 6A à 6C sont des chronogrammes destinés à exposer les avantages de la présente invention ; et
la figure 7 représente un deuxième mode de réalisation de la présente invention.

Par souci de clarté, les mêmes éléments ont été désignés par les mêmes références aux différentes figures. De plus, comme cela est habituel dans la représentation de circuit, seuls les éléments qui sont nécessaires à la compréhension de l'invention ont été représentés dans les figures et seront décrits par la suite. En particulier, les circuits d'horloge et les constitutions respectives des circuits de commande et de traitement des signaux modulés n'ont pas été détaillés.

La figure 4 représente un premier mode de réalisation d'un transpondeur 10' selon la présente invention. Comme précédemment, ce transpondeur comprend un circuit oscillant formé d'une inductance L2 et d'un condensateur C2 connectés en parallèle entre deux bornes 11, 12 d'entrée alternative d'un moyen de redressement. Deux bornes de sortie redressée 14, 15, respectivement positive et de référence, du moyen de redressement fournissent, par l'intermédiaire d'un condensateur de lissage Ca, une tension d'alimentation Va' d'un bloc électronique 17, par exemple un microprocesseur µP. La tension d'alimentation Va du bloc 17 est régulée par un circuit régulateur 16 (REG) . On notera que l'on pourrait aussi utiliser un régulateur de type parallèle connecté entre les bornes 14 et 15.

Pour transmettre des données du transpondeur 10' vers une borne (généralement fixe) de lecture et d'écriture, non représentée, le bloc 17 commande un étage de modulation (rétromodulation) du circuit résonant (L2, C2). L'étage de modulation est de type résistif et comprend un interrupteur électronique, par exemple un transistor T, et une résistance R, associés en série entre la borne 14 et la masse 15.

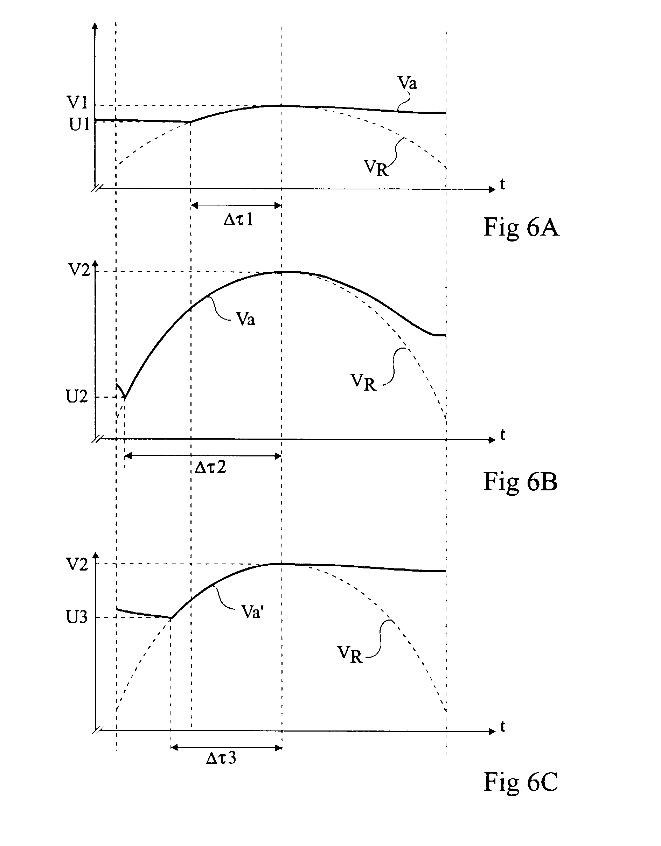

Selon l'invention, l'étage de modulation est placé en amont du condensateur Ca. Un moyen de conduction unidirectionnelle 18 est prévu entre une première borne 19 du condensateur Ca et la borne 14. De préférence, le moyen de conduction unidirectionnelle 18 est une diode D_{R}. La cathode de la diode D_{R} est alors connectée à la borne 19 et son anode à la borne 14. Le rôle et les avantages du moyen 18 selon la présente invention seront mieux compris dans la description ci-après des figures 6A à 6C effectuée en relation avec la figure 2 décrite précédemment.

Comme précédemment, on considère que le transistor T est commandé à une fréquence nettement inférieure (généralement avec un rapport d'au moins 10) à la fréquence du signal d'excitation du circuit oscillant de la borne de lecture/écriture. Par exemple, la fréquence du circuit oscillant sera de 13,56 MHz (période de 74 ns), pour une fréquence d'excitation du transistor de 847,5 kHz (période de 1,18 µs). Par souci de clarté, on considérera que l'excitation VT du transistor T est identique à celle décrite précédemment en relation avec la figure 2.

La figure 5 illustre les variations de la tension d'alimentation Va' aux bornes des circuits électroniques 16, 17.

Lorsque l'interrupteur T est ouvert, pendant l'intervalle [0, T1/2], la tension d'alimentation Va' est identique à la tension Va, c'est-à-dire qu'elle correspond à la tension de sortie V_{R} - représentée en pointillés - du pont redresseur 13 lissée par le condensateur Ca. Comme précédemment, pendant cette phase, la décharge du condensateur Ca assure l'alimentation des seuls circuits 16, 17. La charge du condensateur s'effectue pendant un intervalle de temps Δτ1. La tension Va' varie entre un niveau maximal V1 et un niveau minimal U1.

Lorsque l'interrupteur T est fermé, pendant l'intervalle [T1/2, T1], le circuit oscillant L2-C2 du transpondeur 10' est soumis à un amortissement supplémentaire. La tension baisse aux bornes de l'enroulement L2 et donc, comme l'illustre la figure 5, le niveau maximal atteint par la tension V_{R} aux sorties du pont 13 diminue comme dans le cas décrit précédemment à une valeur V2.

Lors de la décharge du condensateur Ca, la diode D_{R} selon l'invention bloque le courant de décharge supplémentaire qui autrement circulerait dans la résistance R. Par conséquent, comme dans le cas où l'interrupteur T est ouvert, la décharge du condensateur sert uniquement à alimenter les circuits électroniques 16, 17. Alors, le condensateur Ca se décharge moins que dans le cas décrit précédemment en relation avec la figure 3. En d'autres termes, la durée de recharge Δτ3 du condensateur Ca est inférieure à la durée de recharge Δτ2 de la figure 3 et la valeur minimale U3 est supérieure à U2.

Les figures 6A à 6C sont des chronogrammes permettant de comparer plus facilement les différentes situations. On suppose que les chronogrammes sont tracés sur un même intervalle de temps autour des maxima atteints par la tension Va en l'absence et en présence de rétromodulation.

La figure 6A représente la variation de la tension d'alimentation Va (figures 1, 3) autour de la valeur maximale V1 atteinte par la tension V_{R} de sortie du pont 13 en l'absence de rétromodulation. Comme cela a été exposé précédemment, pendant une durée de recharge Δτ1, le condensateur est réalimenté par la tension redressée V_{R} et la tension à ses bornes passe de U1 à V1. Le condensateur Ca alimente ensuite les seuls circuits électroniques 16, 17 tandis que sa tension passe de V1 à U1. Le cycle se répète alors par la recharge pendant l'intervalle Δτ1 du condensateur puis sa décharge entre V1 et U1. On rappelle ici qu'en l'absence de rétromodulation, l'alimentation Va' (figures 4, 5) obtenue avec le circuit de l'invention est identique à l'alimentation Va.

La figure 6B correspond à la variation de la tension d'alimentation Va (figures 1, 3) de circuits 16, 17 lorsque le transistor T est fermé. Comme cela a été exposé précédemment en relation avec la figure 3, le condensateur Ca se charge pendant un intervalle de temps Δτ2 jusqu'à ce que la tension sinusoïdale redressée V_{R} atteigne son niveau maximal V2, puis le condensateur Ca se décharge d'une part en fournissant l'énergie nécessaire à l'alimentation des circuits électroniques 16, 17 et d'autre part en dissipant une partie importante de son énergie dans la résistance R. Le condensateur Ca subissant un courant de décharge supplémentaire par rapport à la consommation du microprocesseur µP, la tension chute à un niveau U2 très inférieur à U1.

La figure 6C représente les variations de l'alimentation Va' (figures 4, 5), lorsque le transistor T est fermé. Selon l'invention, comme cela a été exposé précédemment en relation avec les figures 4 et 6, la décharge du condensateur est similaire à celle représentée en figure 6A et la valeur minimale U3 est nettement supérieure à U2.

Ainsi, un avantage de la présente invention est que la valeur minimale de tension aux bornes du condensateur de lissage est nettement plus importante. Par exemple, pour une tension maximale V2 de 15 volts, une valeur minimale utile de 12 volts sera obtenue, ce qui constitue une augmentation d'un tiers par rapport à une valeur classique de 9 volts dans les mêmes conditions.

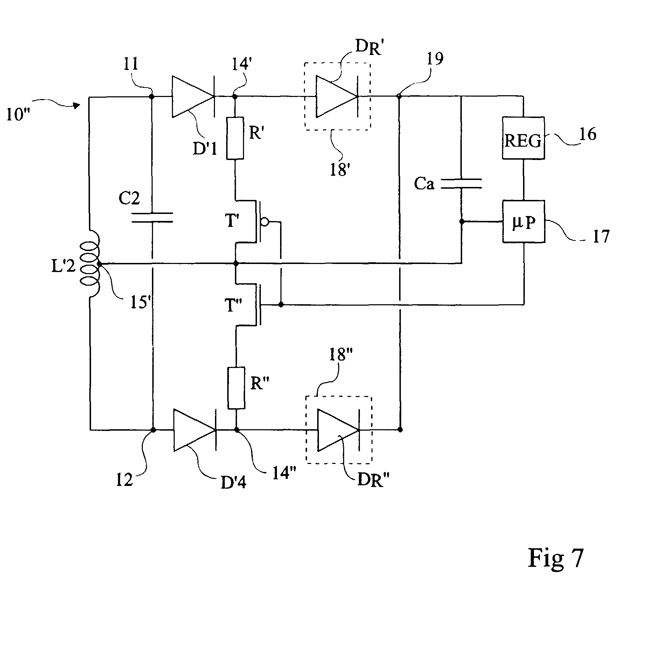

La figure 7 représente un deuxième mode de réalisation d'un transpondeur 10" selon la présente invention. Ce transpondeur 10" reprend sensiblement les mêmes éléments que ceux de la figure 4.

Une caractéristique de ce deuxième mode de réalisation est de prévoir une inductance L2' à point milieu 15'. Ce point milieu sert alors de référence pour l'alimentation continue des circuits électroniques 16, 17 côté transpondeur. Ainsi, une première borne 11 de l'enroulement L2' est connectée à l'anode d'une diode de redressement D1' dont la cathode constitue une première borne 14' d'alimentation haute du circuit côté transpondeur. Une deuxième borne 12 de l'enroulement L2' est connectée à l'anode d'une deuxième diode de redressement D4' dont la cathode constitue une deuxième borne 14" d'alimentation haute du circuit côté transpondeur. Entre chacune des bornes 14', 14" et la ligne de référence 15' est connecté un moyen de modulation résistif (R', T' ; R", T", respectivement). Des moyens de conduction unidirectionnelle 18' et 18" sont connectés entre chacune des bornes 14', 14" et une borne 19 d'alimentation des circuits électroniques 16, 17. De préférence, les moyens 18', 18" sont des diodes D_{R}', D_{R}", dont les cathodes sont reliées à la borne 19 et les anodes respectivement aux bornes 14', 14". Comme précédemment, un condensateur de lissage Ca est connecté entre la borne 19 et la ligne de référence 15' pour lisser la tension d'alimentation des circuits électroniques 16, 17. Le recours à des diodes D1' et D4' en amont des moyens de modulation résistifs est lié à l'utilisation de transistors en guise de commutateurs T' et T" qui risquent de ne pas supporter une tension non redressée à leurs bornes.

On notera que les commandes des interrupteurs T', T" des étages de modulation R', T' et R", T" sont complémentaires. Elles peuvent être réalisées à partir d'une même commande fournie par le bloc 17, comme l'illustre la figure 7, ou par des commandes distinctes.

Bien entendu, la présente invention est susceptible de diverses variantes et modifications qui apparaîtront à l'homme de l'art. En particulier, on notera que l'invention s'applique à tout type de rétromodulation (par exemple, d'amplitude, de phase, de fréquence), pour autant que le moyen y afférent soit résistif. Les dimensionnements respectifs des condensateurs, résistances, inductances ainsi que des autres composants d'un transpondeur selon la présente invention sont à la portée de l'homme du métier en fonction de l'application. De plus, l'homme du métier pourra utiliser comme moyen de conduction unidirectionnelle (18 ; 18', 18") tout moyen assurant une fonction de type "diode" : jonction simple, transistor MOS à effet de champ monté en diode, résistance de très grande valeur, ou transistor commandé. Dans ce dernier cas, la commande doit être effectuée de sorte que le transistor soit ouvert pendant les intervalles Δτ3 tels que représentés en figures 5 et 6C.

Parmi les applications de la présente invention, on signalera plus particulièrement les lecteurs (par exemple, les bornes ou portiques de contrôle d'accès, les distributeurs automatiques de produits, les terminaux d'ordinateurs, les terminaux téléphoniques, les téléviseurs ou décodeurs satellite, etc.) de cartes à puces sans contact (par exemple, les cartes d'identification pour contrôle d'accès, les cartes porte-monnaie électronique, les cartes de stockage d'information sur le possesseur de la carte, les cartes de fidélité de consommateurs, les cartes de télévisions à péage, etc.).

## Revendications

1. Transpondeur (10', 10") comprenant un circuit oscillant (L2, C2 ; L2', C2) d'extraction d'un signal électromagnétique connecté à l'entrée d'un moyen de redressement (13 ; D1', D4'), des circuits électroniques comprenant un circuit de commande d'un moyen résistif commuté (R, T ; R', T' ; R", T") pour modifier la réponse du transpondeur vers l'émetteur dudit signal électromagnétique, la sortie du moyen de redressement étant reliée à un condensateur (Ca) de lissage participant à la fourniture d'une tension d'alimentation desdits circuits électroniques, caractérisé en ce qu'il comprend des moyens à conduction unidirectionnelle (18 ; 18', 18") pour interdire la décharge du condensateur dans le moyen résistif commuté.

2. Transpondeur selon la revendication 1, caractérisé en ce que le moyen résistif cité (T', R', T", R") est entre le moyen de redressement (13, D1', D4') et les moyens à conduction unidirectionnelle (18 ; 18', 18").

3. Transpondeur selon la revendication 1 ou 2, caractérisé en ce que les moyens à conduction unidirectionnelle (18 ; 18', 18") sont constitués d'une diode (DR ; DR', DR") dont la cathode est connectée à la borne positive (19) du condensateur (Ca).

4. Transpondeur selon l'une quelconque des revendications 1 à 3, caractérisé en ce que le moyen de redressement (13) est un pont de diodes (D1, D2, D3, D4) entre les bornes de sortie (14, 15) duquel sont connectées, successivement et en parallèle, une première association en série d'une résistance (R) et d'un transistor MOS (T) et une deuxième association en série des moyens (18) de conduction unidirectionnelle et du condensateur de lissage (Ca), le point milieu (19) de la deuxième association série constituant une borne positive d'alimentation locale.

5. Transpondeur selon l'une quelconque des revendications 1 à 3, caractérisé en ce que le circuit oscillant (L2', C2) comporte, entre deux bornes d'alimentation (11, 12), une inductance à point milieu (L2') définissant une ligne de référence (15'), une association en série d'une résistance (R', R") et d'un transistor MOS (T', T") étant connectée entre une des bornes d'alimentation et la ligne de référence, et lesdits moyens à conduction unidirectionnelle (18', 18") étant connectés entre chaque borne d'alimentation et une borne positive (19) du condensateur de lissage (Ca).

6. Transpondeur selon la revendication 5, caractérisé en ce que des diodes de redressement (D1', D4') sont intercalées entre ledit circuit oscillant (L2', C2) et les moyens à conduction unidirectionnelle (18', 18").
